# EUROPÄISCHE PATENTANMELDUNG

(11) **EP 4 691 868 A1**
(43) Veröffentlichungstag der Anmeldung: **11.02.2026**
(21) Anmeldenummer: 25190882.8
(22) Anmeldetag: 22.07.2025
(51) Int. Cl.: B60W 10/18, B60W 10/20, B60W 30/02, B60W 60/00, G05D 1/00

(54) **VERFAHREN UND STEUERSYSTEM ZUM BETREIBEN EINES SELBSTFAHRENDEN FAHRZEUGS**

(30) Priorität: 06.08.2024 DE 102024122345
(71) Anmelder: ZF CV Systems Global GmbH, 3006 Bern (CH)
(72) Erfinder: Tappeiner, Michael, 88048 Friedrichshafen (DE); Keller, Florian, 78355 Mindersdorf (Hohenfels) (DE)
(74) Vertreter: Von Ahsen, Nils Thomas

(57) **Zusammenfassung**

Ein Verfahren zum Betreiben eines selbstfahrenden Fahrzeugs, mit den Schritten: Festlegen (S1) einer Querdynamikanforderung zum Steuern der Querdynamik des selbstfahrenden Fahrzeugs entlang einer Fahrtroute, Kommunizieren (S2) der Querdynamikanforderung an eine Lenkungssteuereinrichtung zum Steuern einer Lenkkinematik des selbstfahrenden Fahrzeugs, Prüfen (S3), ob die kommunizierte Querdynamikanforderung ein Querdynamikkriterium für den Betrieb des selbstfahrenden Fahrzeugs erfüllt, und Kommunizieren (S4) eines Bremsbefehls zum Stillsetzen des selbstfahrenden Fahrzeugs in Abhängigkeit eines aus dem Schritt des Prüfens (S3) resultierenden Prüfergebnisses (P). Zudem ein Steuersystem zum Betreiben eines selbstfahrenden Fahrzeugs.

## Beschreibung

### Technisches Gebiet

Die vorliegende Erfindung bezieht sich auf ein Verfahren und ein Steuersystem zum Betreiben eines selbstfahrenden Fahrzeugs.

### Stand der Technik

Aus dem Stand der Technik ist es bekannt selbstfahrende Fahrzeuge automatisiert entlang einer vorbestimmten Fahrtroute zu navigieren. Um zu überprüfen, ob das Fahrzeug der vorbestimmten Fahrtroute folgt, ist es zudem bekannt, eine Position oder Pose des Fahrzeugs zu der Fahrtroute auszuwerten. Die Position oder Pose kann bezogen auf die Fahrtroute oder eine Fahrbahngrenze absolut oder relativ bestimmt werden. Überschreitet das Fahrzeug eine für die Position oder Pose vordefinierte Sicherheitsgrenze, ist es weiter bekannt, das Fahrzeug in einen sicheren Betriebszustand zu versetzen, um ein sicherheitsrelevantes Verlassen der vorbestimmten Fahrtroute zu vermeiden.

Aus der DE 10 2014 219 936 A1 ist ein Verfahren zur Ermittlung eines Steuerprofils für ein Kraftfahrzeug bekannt. In dem Verfahren wird ein Steuerprofil zur Planung eines Bewegungspfads, entlang welchem das Kraftfahrzeug automatisiert bewegt werden soll, in Abhängigkeit einer Grenze eines Aktuators einer Kraftfahrzeuglenkung vordefiniert. Die derart vordefinierte Grenze kann auf maximalen Positionen der Lenkung basieren.

Aus der DE 10 2021 115 265 A1 ist ein Verfahren zur Querführungsregelung eines Fahrzeugs bekannt, in welchem ein Gierratenregler eine Abweichung einer Ist-Gierrate von einer Soll-Gierrate bei einer Fahrt des Fahrzeugs erkennt. Basierend auf der erkannten Abweichung werden Reglergrenzen in Abhängigkeit einer dauerhaften Störgröße verschoben, so dass die Gierrate mit der dauerhaften Störgröße eine Fahrt ohne einen notwendigen Reglereingriff durch den Gierratenregler darstellt.

### Darstellung der Erfindung

Ein Aspekt betrifft ein Verfahren zum Betreiben eines selbstfahrenden Fahrzeugs. Bei dem selbstfahrenden Fahrzeug kann es sich um ein Fahrzeug handeln, welches ohne Einfluss eines menschlichen Fahrers fahren und ohne einen derartigen Einfluss die Längsdynamik und Querdynamik des Fahrzeugs selbst steuern kann. Bei dem selbstfahrenden Fahrzeug kann es sich daher um ein autonomes Fahrzeug handeln. Das selbstfahrende Fahrzeug kann in mindestens einem Automatisierungsgrad betrieben werden, welcher ein assistierter Betriebsmodus, ein automatisierter Betriebsmodus oder ein autonomer Betriebsmodus sein kann.

Das Verfahren weist als einen Schritt ein Festlegen einer Querdynamikanforderung zum Steuern der Querdynamik des selbstfahrenden Fahrzeugs entlang einer vorbestimmten Fahrtroute auf. Gemäß einer Ausführungsform des Verfahrens kann die festgelegte Querdynamikanforderung eine Lenkwinkelvorgabe zum Steuern einer Lenkkinematik sein oder aufweisen. Die Lenkwinkelvorgabe kann einen von einer Navigationseinrichtung, welche das Fahrzeug aufweisen kann, angeforderten Lenkwinkel, Lenkwinkelgradienten oder Lenkwinkelruck zum Steuern der Querdynamik entlang der vorbestimmten Fahrtroute aufweisen. Bei dem angeforderten Lenkwinkelgradienten kann es sich um die erste zeitliche oder örtliche Ableitung des angeforderten Lenkwinkels handeln. Bei dem angeforderten Lenkwinkelruck kann es sich um die zweite zeitliche oder örtliche Ableitung des angeforderten Lenkwinkels handeln. Die vorbestimmte Fahrtroute kann vor oder während dem Betrieb des selbstfahrenden Fahrzeugs vorbestimmt werden, wobei die vorbestimmte Fahrtroute eine statisch oder dynamisch vorbestimmte Fahrtroute sein kann.

Die Navigationseinrichtung kann zum Spurführen des selbstfahrenden Fahrzeugs eingerichtet sein. Bei dem Spurführen kann es sich um ein querdynamisches Führen des selbstfahrenden Fahrzeugs entlang der vorbestimmten Fahrtroute handeln. Bei der Querdynamikanforderung kann es sich um eine fehlerhafte Anforderung, beispielsweise eine fehlerhafte Lenkwinkelvorgabe, handeln, welche dazu führt, dass das selbstfahrende Fahrzeug die vorbestimmte Fahrtroute verlässt. Eine sichere Spurführung entlang der vorbestimmten Route kann daher basierend auf der Querdynamikanforderung nicht bereitstellbar sein. Mit dem Verfahren wird es ermöglicht, dass eine sichere Spurführung durch ein frühzeitiges Erkennen der fehlerhaften Anforderung weiterhin gesteuert oder geregelt werden kann. Mit dem Verfahren wird es weiter ermöglicht, dass ein sicherer Betriebszustand durch das frühzeitige Erkennen der fehlerhaften Anforderung effizient herbeigeführt werden kann.

Alternativ oder zusätzlich zu der Lenkwinkelvorgabe kann die Querdynamikanforderung eine Gierwinkelvorgabe zum Steuern der Lenkkinematik des selbstfahrenden Fahrzeugs sein oder aufweisen. Die Gierwinkelvorgabe kann einen von der Navigationseinrichtung angeforderten Gierwinkel oder angeforderte Gierrate zum Steuern der Querdynamik entlang der vorbestimmten Fahrtroute aufweisen. Weiter alternativ oder zusätzlich zu der Lenkwinkelvorgabe kann die Querdynamikanforderung eine querdynamische Routenvorgabe zum Steuern der Lenkkinematik des selbstfahrenden Fahrzeugs sein oder aufweisen. Die querdynamische Routenvorgabe kann einen von der Navigationseinrichtung angeforderten Radius einer Bahnkurve oder angeforderte Krümmung der Bahnkurve entlang der Fahrtroute aufweisen. Weiter alternativ oder zusätzlich zu der Lenkwinkelvorgabe kann die Querdynamikanforderung eine Querbeschleunigungsvorgabe zum Steuern der Lenkkinematik des selbstfahrenden Fahrzeugs sein oder aufweisen. Die Querbeschleunigungsvorgabe kann eine von der Navigationseinrichtung angeforderte Querbeschleunigung des Fahrzeugs aufweisen.

Gemäß einer Ausführungsform wird im Schritt des Festlegens die Querdynamikanforderung zeitlich oder örtlich gefiltert. Das Verfahren kann somit als einen weiteren Schritt ein zeitliches oder örtliches Filtern der Querdynamikanforderung aufweisen. Die Querdynamikanforderung kann somit in vorteilhafter Weise für die weiteren Schritte des Verfahrens in einer robusten Weise bereitgestellt werden.

Das Verfahren weist als einen weiteren Schritt ein Kommunizieren der festgelegten Querdynamikanforderung an eine Lenkungssteuereinrichtung zum Steuern einer Lenkkinematik des selbstfahrenden Fahrzeugs basierend auf der festgelegten Querdynamikanforderung auf. Die Lenkungssteuereinrichtung kann getrennt von der Navigationseinrichtung eingerichtet sein, wobei die Lenkungssteuereinrichtung und die Navigationseinrichtung kabellos oder kabelgebunden miteinander verbunden sein können. Bei der Lenkungssteuereinrichtung kann es sich daher um eine zu der Navigationseinrichtung separate Einrichtung handeln. Die Lenkungssteuereinrichtung kann ferner auch getrennt von der Lenkkinematik eingerichtet sein.

Im Schritt des Kommunizierens kann die Querdynamikanforderung von der Navigationseinrichtung an die Lenkungssteuereinrichtung kommuniziert werden. Ist die Lenkungssteuereinrichtung getrennt von der Lenkkinematik eingerichtet, kann die Querdynamikanforderung über die Lenkkinematik an die Lenkungssteuereinrichtung kommuniziert werden, wobei es sich bei der Querdynamikanforderung auch um eine von der Lenkungssteuereinrichtung an der Lenkkinematik abgegriffene oder umgesetzte Querdynamikanforderung handeln kann. Im Schritt des Kommunizierens kann eine Querdynamikanforderung als Steuerparameter an die Lenkkinematik kommuniziert werden, um das Fahrzeug entlang der vorbestimmten Fahrtroute zu steuern. Der Steuerparameter kann mindestens eines von dem angeforderten Lenkwinkel, dem angeforderten Lenkwinkelgradienten, dem angeforderten Lenkwinkelruck, dem angeforderten Gierwinkel, der angeforderten Gierrate, dem angeforderten Radius, der angeforderten Krümmung und der angeforderten Querbeschleunigung aufweisen.

Das Verfahren weist als einen weiteren Schritt ein Prüfen, ob die kommunizierte Querdynamikanforderung ein Querdynamikkriterium für den Betrieb des selbstfahrenden Fahrzeugs erfüllt, auf. Bei dem Querdynamikkriterium kann es sich um ein vorbestimmtes Querdynamikkriterium handeln. Das Querdynamikkriterium kann einen Lenkwinkelgrenzwert zum Limitieren der Lenkkinematik oder der Querdynamik des selbstfahrenden Fahrzeugs aufweisen. Bei dem Lenkwinkelgrenzwert kann es sich um einen Grenzwert für einen Lenkwinkel, einen Lenkwinkelgradienten oder einen Lenkwinkelruck handeln. Im Schritt des Prüfens kann geprüft werden, ob die kommunizierte Querdynamikanforderung den Lenkwinkelgrenzwert überschreitet.

Alternativ oder zusätzlich zu dem Lenkwinkelgrenzwert kann das Querdynamikkriterium einen Gierwinkelgrenzwert zum Limitieren der Lenkkinematik oder der Querdynamik des selbstfahrenden Fahrzeugs aufweisen. Bei dem Gierwinkelgrenzwert kann es sich um einen Grenzwert für einen Gierwinkel oder eine Gierrate handeln. Im Schritt des Prüfens kann somit geprüft werden, ob die kommunizierte Querdynamikanforderung den Gierwinkelgrenzwert überschreitet. Weiter alternativ oder zusätzlich zu dem Lenkwinkelgrenzwert kann das Querdynamikkriterium einen Routengeometriegrenzwert zum Limitieren der Lenkkinematik oder der Querdynamik des selbstfahrenden Fahrzeugs aufweisen. Bei dem Routengeometriegrenzwert kann es sich um einen Grenzwert für einen Radius oder eine Krümmung einer zu befahrenen Bahnkurve handeln. Im Schritt des Prüfens kann somit geprüft werden, ob die kommunizierte Querdynamikanforderung den Routengeometriegrenzwert überschreitet. Weiter alternativ oder zusätzlich zu dem Lenkwinkelgrenzwert kann das Querdynamikkriterium einen Querbeschleunigungsgrenzwert zum Limitieren der Lenkkinematik oder der Querdynamik des selbstfahrenden Fahrzeugs aufweisen. Im Schritt des Prüfens kann somit geprüft werden, ob die kommunizierte Querdynamikanforderung den Querbeschleunigungsgrenzwert überschreitet.

Gemäß einer weiteren Ausführungsform kann das Querdynamikkriterium derart vorbestimmt sein, dass ein Regeln der Spurführung des selbstfahrenden Fahrzeugs mit der Querdynamikanforderung innerhalb regelungstechnischer Sicherheitsgrenzen erfolgen kann. Bei der Querdynamikanforderung kann es sich daher um eine Regelanforderung zum Regeln der Spurführung handeln. Die Querdynamikanforderung kann somit auch zum Regeln der Querdynamik festgelegt werden. Mit dem Verfahren kann ein derartiges Regeln mit dem Querdynamikkriterium innerhalb der regelungstechnischer Sicherheitsgrenzen robust zugelassen werden.

Mit dem Verfahren kann im Schritt des Prüfens die durch die Navigationseinrichtung vorgegebene und von der Navigationseinrichtung zur Lenkungssteuerung ausgegebene Querdynamikanforderung basierend auf dem Querdynamikkriterium geprüft werden. Bei dem Querdynamikkriterium handelt es sich um ein die Querdynamik des Fahrzeugs beschreibendes Kriterium. Bei dem Querdynamikkriterium kann es sich somit um ein die Querdynamik des Fahrzeugs beschreibendes Kriterium und daher nicht um ein lenkungsinternes Kriterium eines Lenkkungsaktors handeln. Das Verfahren kann unabhängig von einer mit der Lenkkinematik gestellten oder umgesetzten Querdynamikanforderung durchgeführt werden.

Das Verfahren weist als einen Schritt ein Kommunizieren eines Bremsbefehls zum Stillsetzen des selbstfahrenden Fahrzeugs in Abhängigkeit eines aus dem Schritt des Prüfens resultierenden Prüfergebnisses auf. Als Prüfergebnis kann vorliegen, dass die Querdynamikanforderung das Querdynamikkriterium erfüllt. Als Prüfergebnis kann vorliegen, dass die Lenkwinkelvorgabe den Lenkwinkelgrenzwert überschreitet. Alternativ oder zusätzlich dazu kann als Prüfergebnis vorliegen, dass die Gierwinkelvorgabe den Gierwinkelgrenzwert überschreitet. Weiter alternativ oder zusätzlich kann als Prüfergebnis vorliegen, dass die querdynamische Routenvorgabe den Routengeometriegrenzwert überschreitet. Weiter alternativ oder zusätzlich kann als Prüfergebnis vorliegen, dass die Querbeschleunigungsvorgabe den Querbeschleunigungsgrenzwert überschreitet.

Der Bremsbefehl kann an eine Bremseinrichtung des selbstfahrenden Fahrzeugs ausgegeben werden. Der Bremsbefehl kann zum Herbeiführen einer Notbremsung durch die Bremseinrichtung kommuniziert werden. Bei dem Stillsetzen kann es sich um ein Sicherheitsbremsmanöver, beispielsweise ein normiertes Bremsmanöver (ein minimal risk manoeuvre oder MRM), handeln. Das Bremsmanöver kann zum vollständigen Abbremsen des selbstfahrenden Fahrzeugs durchgeführt werden. Das Stillsetzen kann das selbstfahrende Fahrzeug mit der Notbremsung ohne aktive Querführung in einen Stillstand versetzen.

Mit dem Verfahren kann direkt auf die vorgegebene beziehungsweise ausgegebene Querdynamikanforderung mit dem kommunizierten Bremsbefehl zum Herbeiführen eines sicheren Stillstands des selbstfahrenden Fahrzeugs reagiert werden, bevor die Querdynamikanforderung zu einer fehlerhaften relativen oder absoluten Abweichung im Aufenthaltsort des selbstfahrenden Fahrzeugs zu der vorbestimmten Fahrtroute führen kann. Mit dem Prüfen der Querdynamikanforderung kann eine fehlerhafte Anforderung bereits dann frühzeitig erkannt werden, wenn die fehlerhafte relative oder absolute Abweichung im Aufenthaltsort des selbstfahrenden Fahrzeugs zu der vorbestimmten Fahrtroute, welche aus der fehlerhaften Anforderung in Zukunft resultieren wird, noch nicht erreicht worden ist. Extreme querdynamische Korrekturen, beispielsweise Lenkkorrekturen, welche erforderlich werden können, um den Aufenthaltsort des selbstfahrenden Fahrzeugs dann in Zukunft zu korrigieren, können somit vermieden werden. Zudem kann ein Verlassen eines Sicherheitskorridors durch einen von der vorbestimmten Fahrtroute wegführenden Bremsweg vermieden werden. Weiter kann mit dem Verfahren in vorteilhafter Weise frühzeitig auf eine fehlerhafte Querdynamikanforderung reagiert werden. Damit kann auch in vorteilhafter Weise ein regelungstechnischer Reaktionsspielraum zum Einregeln der querdynamischen Spurführung aufrechterhalten oder vergrößert werden. Außerdem kann ein Sicherheitskorridor entlang der vorbestimmten Fahrtroute zur Spurführung bei Aufrechterhaltung einer robusten Einregelung verkleinert werden. Zudem kann in vorteilhafter Weise eine Fahrtgeschwindigkeit aufrechterhalten oder eine Verringerung der Fahrtgeschwindigkeit für eine Begrenzung eines Bremswegs bei der Notbremsung vermieden werden.

Das Kommunizieren des Bremsbefehls kann durchgeführt werden, um zu vermeiden, dass das selbstfahrende Fahrzeug einen entlang der Fahrtroute vorbestimmten befahrbaren Fahrbereich verlässt. Zum Befahren des befahrbaren Fahrbereichs kann das selbstfahrende Fahrzeug eingerichtet sein, Abweichungen von der vorbestimmten Fahrtroute zu erkennen und die aktuelle Bewegung auf die vorbestimmte Fahrtroute einzuregeln. Der befahrbare Bereich kann ein vorbestimmter Korridor sein, welcher die Fahrtroute aufweist. Der Korridor kann lateral zu der Fahrtroute aufgespannt sein. Der befahrbare Bereich kann eine Fahrbahn entlang der vorbestimmten Fahrtroute aufweisen. Zusätzlich zu der Fahrbahn kann der befahrbare Bereich eine Auslauffläche zum Abbremsen des selbstfahrenden Fahrzeugs aufweisen. Das Stillsetzen kann das selbstfahrende Fahrzeug mit aktiver Querführung innerhalb des befahrbaren Bereichs in den Stillstand versetzen.

Gemäß einer weiteren Ausführungsform des Verfahrens können die Schritte des Festlegens der Querdynamikanforderung und des Kommunizierens der festgelegten Querdynamikanforderung von einer auf dem selbstfahrenden Fahrzeug angeordneten Navigationseinrichtung durchgeführt werden. Die Navigationseinrichtung kann zum automatisierten Navigieren des selbstfahrenden Fahrzeugs eingerichtet sein. Das Verfahren kann somit in vorteilhafter Weise autark auf dem selbstfahrenden Fahrzeug durchgeführt werden.

Gemäß einer weiteren Ausführungsform des Verfahrens kann im Schritt des Prüfens geprüft werden, ob mit der kommunizierten Querdynamikanforderung ein Grenzwert für einen Querdynamikzustand des selbstfahrenden Fahrzeugs überschritten wird. Bei dem Grenzwert kann es sich um den Lenkwinkelgrenzwert handeln. Alternativ oder zusätzlich kann es sich bei dem Grenzwert um den Gierwinkelgrenzwert, den Routengeometriegrenzwert oder den Querbeschleunigungsgrenzwert handeln.

Gemäß einer weiteren Ausführungsform des Verfahrens kann der Grenzwert für den Querdynamikzustand mindestens eines von einem maximalen Lenkwinkel, einem maximalen Lenkwinkelgradienten und einem maximalen Lenkwinkelruck aufweisen. Gemäß dieser Ausführungsformen kann im Schritt des Kommunizierens der Bremsbefehl kommuniziert werden, wenn als ein aus dem Schritt des Prüfens resultierendes Prüfergebnis ein Überschreiten des Grenzwerts vorliegt. Das selbstfahrende Fahrzeug kann so effizient in einen sicheren Betriebszustand versetzt werden.

Gemäß einer weiteren Ausführungsform des Verfahrens kann dieses als einen weiteren Schritt ein Bestimmen des Querdynamikkriteriums in Abhängigkeit von einem Längsdynamikzustand des selbstfahrenden Fahrzeugs aufweisen. Das Querdynamikkriterium kann in Abhängigkeit oder basierend auf einem längsdynamischen Parameter, beispielsweise einer Längsgeschwindigkeit oder einer Längsbeschleunigung, bestimmt werden. Das Querdynamikkriterium kann somit längsdynamisch vorbestimmt sein.

Gemäß einer weiteren Ausführungsform des Verfahrens kann dieses als einen weiteren Schritt ein Bestimmen des Querdynamikkriteriums in Abhängigkeit von einem Aufenthaltsort des selbstfahrenden Fahrzeugs in Bezug auf die vorbestimmte Fahrtroute aufweisen. Bei dem Aufenthaltsort kann es sich um einen relativen Aufenthaltsort in Bezug auf eine Trajektorie der Fahrtroute handeln. Das Querdynamikkriterium kann in Abhängigkeit einer relativen Position beziehungsweise eines Abstands des selbstfahrenden Fahrzeugs zu der Fahrtroute bestimmt werden. Das Querdynamikkriterium oder der Grenzwert kann vergrößert werden, wenn sich das selbstfahrende Fahrzeug in dem vorbestimmten Korridor mit geringerer Abweichung um die Fahrtroute aufhält. Das Querdynamikkriterium oder der Grenzwert kann verkleinert werden, wenn sich das selbstfahrende Fahrzeug in dem vorbestimmten Korridor mit erhöhter Abweichung um die Fahrtroute aufhält. Das Querdynamikkriterium kann somit an eine aktuelle Abweichung des selbstfahrenden Fahrzeugs von der vorbestimmten Fahrtroute angepasst werden.

Gemäß einer weiteren Ausführungsform des Verfahrens kann im Schritt des Prüfens geprüft werden, ob die kommunizierte Querdynamikanforderung das vorbestimmte Querdynamikkriterium für eine vorbestimmte Zeitdauer erfüllt. Das resultierende Prüfergebnis kann erst dann vorliegen, wenn die kommunizierte Querdynamikanforderung das vorbestimmte Querdynamikkriterium für die vorbestimmte Zeitdauer erfüllt. Das Verfahren kann mit einem derartigen Filter robust durchgeführt werden.

Gemäß einer weiteren Ausführungsform des Verfahrens können die Schritte des Prüfens der Querdynamikanforderung und des Kommunizierens des Bremsbefehls von der Lenkungssteuereinrichtung durchgeführt werden. Die Lenkungssteuereinrichtung kann zum automatisierten Herbeiführen des Stillsetzens des selbstfahrenden Fahrzeugs eingerichtet sein. Das Verfahren kann somit weiter in vorteilhafter Weise autark auf dem selbstfahrenden Fahrzeug durchgeführt werden.

Ein weiterer Aspekt betrifft ein Steuersystem zum Betreiben eines selbstfahrenden Fahrzeugs. Das Steuersystem kann eingerichtet sein, das Verfahren gemäß dem vorhergehenden Aspekt durchzuführen. Gemäß einer Ausführungsform ist das Steuersystem eingerichtet, das Verfahren automatisiert auf dem selbstfahrenden Fahrzeug durchzuführen.

Das Steuersystem weist eine Navigationseinrichtung auf, welche eingerichtet ist, eine Querdynamikanforderung zum Steuern der Querdynamik des selbstfahrenden Fahrzeugs entlang einer vorbestimmten Fahrtroute festzulegen und die festgelegte Querdynamikanforderung an eine Lenkungssteuereinrichtung zum Steuern einer Lenkkinematik des selbstfahrenden Fahrzeugs zu kommunizieren. Das Steuersystem weist eine Prüfeinrichtung auf, welche eingerichtet ist, zu prüfen, ob die kommunizierte Querdynamikanforderung ein Querdynamikkriterium für den Betrieb des selbstfahrenden Fahrzeugs erfüllt, und einen Bremsbefehl zum Stillsetzen des selbstfahrenden Fahrzeugs auszugeben, wenn die kommunizierte Querdynamikanforderung das Querdynamikkriterium für den Betrieb des selbstfahrenden Fahrzeugs erfüllt.

Ein weiterer Aspekt betrifft ein selbstfahrendes Fahrzeug, welches ein Steuersystem gemäß dem vorhergehenden Aspekt zum automatisierten Betreiben des selbstfahrenden Fahrzeugs aufweist. Gemäß einer Ausführungsform ist das Steuersystem auf dem selbstfahrenden Fahrzeug angeordnet.

Bei einer Ausführungsform oder einem Merkmal eines Aspekts kann es sich um die entsprechende Ausführungsform oder das entsprechende Merkmal eines weiteren Aspekts handeln. So kann das Steuersystem oder das selbstfahrende Fahrzeug jede Einrichtung aufweisen, welche mindestens einen Schritt des Verfahrens durchführen kann.

### Kurze Beschreibung der Figuren

- Figur 1: zeigt schematisch ein Steuersystem zum Betreiben eines selbstfahrenden Fahrzeugs und ein solches gemäß jeweiliger Ausführungsformen.
- Figur 2: zeigt ein Ablaufdiagramm mit Schritten eines Verfahrens zum Betreiben des selbstfahrenden Fahrzeugs.

### Detaillierte Beschreibung von Ausführungsformen

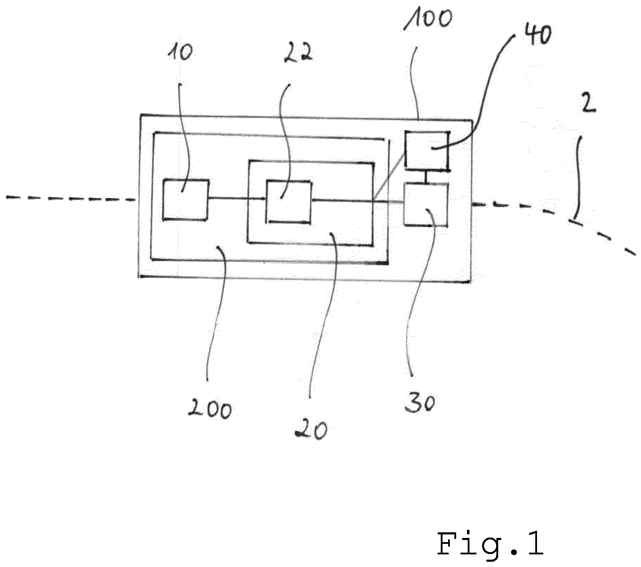

Figur 1 zeigt ein selbstfahrendes Fahrzeug 100, welches entlang einer vorbestimmten Fahrtroute 2 betrieben wird. Das selbstfahrende Fahrzeug 100 weist eine Navigationseinrichtung 10 auf, welche eingerichtet ist, eine Lenkwinkelanforderung zum querdynamischen Steuern des selbstfahrenden Fahrzeugs 100 entlang der vorbestimmten Fahrtroute 2 festzulegen. Das selbstfahrende Fahrzeug 100 weist zudem eine Lenkungssteuereinrichtung 20 auf, welche eingerichtet ist, eine Lenkkinematik 30 des selbstfahrenden Fahrzeugs 100 basierend auf der Lenkwinkelanforderung zu steuern. Die Navigationseinrichtung 10 ist mit der Lenkungssteuereinrichtung 20 verbunden, um die Lenkwinkelanforderung von der Navigationseinrichtung 10 an die Lenkungssteuereinrichtung 20 zu kommunizieren. Das selbstfahrende Fahrzeug 100 weist ein Steuersystem 200 zum Betreiben des selbstfahrenden Fahrzeugs 100 auf. Das Steuersystem 200 weist die Navigationseinrichtung 10, die Lenkungssteuereinrichtung 20 und eine Prüfeinrichtung 22 auf.

Die Lenkungssteuereinrichtung 20 ist eingerichtet, einen Lenkwinkel über die Lenkkinematik 30 zu stellen, welcher das selbstfahrende Fahrzeug 100 entlang der vorbestimmten Fahrtroute 2 führt oder auf diese im Falle einer Abweichung von dieser regelungstechnisch zurückführt. Die Lenkungssteuereinrichtung 20 ist mit der Lenkkinematik 30 verbunden, um einen von der Lenkkinematik 30 gestellten Lenkwinkel zu steuern oder zu regeln. Die Lenkungssteuereinrichtung 20 weist eine Prüfeinrichtung 22 auf, welche eingerichtet ist, zu prüfen, ob die Lenkwinkelanforderung einen Lenkwinkelgrenzwert zum Limitieren der Lenkkinematik 30 überschreitet. Die Prüfeinrichtung 22 ist zudem eingerichtet, einen Bremsbefehl zum Stillsetzen des selbstfahrenden Fahrzeugs 100 an eine Bremseinrichtung 40 des selbstfahrenden Fahrzeugs 100 auszugeben, wenn die Lenkwinkelanforderung den Lenkwinkelgrenzwert überschreitet. Die Bremseinrichtung 40 ist eingerichtet, eine Notbremsung des selbstfahrenden Fahrzeugs 100 basierend auf dem Bremsbefehl herbeizuführen.

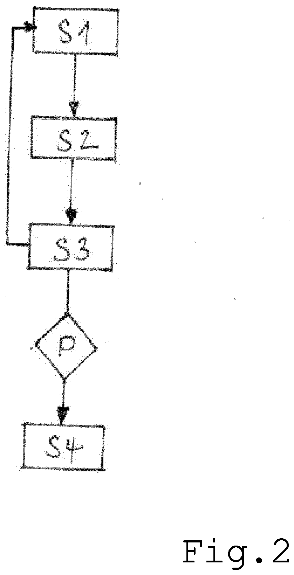

Figur 2 zeigt ein Ablaufdiagramm mit Verfahrensschritten S1 bis S4 zum Betreiben des selbstfahrenden Fahrzeugs 100 entlang der vorbestimmten Fahrtroute 2. In einem ersten Schritt S1 wird die Lenkwinkelanforderung zum Steuern der Lenkkinematik 30 des selbstfahrenden Fahrzeugs 100 entlang der vorbestimmten Fahrtroute 2 von der Navigationseinrichtung 10 festgelegt. In einem zweiten Schritt S2 wird die festgelegte Lenkwinkelanforderung an die Lenkungssteuereinrichtung 20 zum Steuern der Lenkkinematik 30 des selbstfahrenden Fahrzeugs 100 kommuniziert.

In einem dritten Schritt S3, prüft die Lenkungssteuereinrichtung 20, ob die kommunizierte Lenkwinkelanforderung den Lenkwinkelgrenzwert überschreitet, welcher ein sicherheitsrelevantes Querdynamikkriterium für die Spurführung des selbstfahrenden Fahrzeugs 100 entlang der vorbestimmten Fahrtroute 2 ist. Überschreitet die Lenkwinkelanforderung den Lenkwinkelgrenzwert liegt als ein Prüfergebnis P vor, dass das sicherheitsrelevante Querdynamikkriterium erfüllt ist. Liegt das Prüfergebnis P nicht vor, werden die Schritte S1 bis S3 sich wiederholend als Schleife durchgeführt.

In einem vierten Schritt S4 wird der Bremsbefehl durch die Lenkungssteuereinrichtung 20 an die Bremseinrichtung 40 kommuniziert, um eine Notbremsung des selbstfahrenden Fahrzeugs 100 herbeizuführen. Der Bremsbefehl wird dann kommuniziert, wenn das Prüfergebnis P vorliegt. Die herbeigeführte Notbremsung stellt so für das in Abhängigkeit des sicherheitsrelevanten Querdynamikkriteriums einen sicheren Betriebszustand des selbstfahrenden Fahrzeugs 100 her.

### Bezugszeichen (Teil der Beschreibung)

- 2: vorbestimmte Fahrtroute
- 10: Navigationseinrichtung
- 20: Lenkungssteuereinrichtung
- 22: Prüfeinrichtung
- 30: Lenkkinematik
- 40: Bremseinrichtung
- 100: selbstfahrendes Fahrzeug
- 200: Steuersystem
- P: Prüfergebnis
- S1: Festlegen Querdynamikanforderung
- S2: Kommunizieren Querdynamikanforderung
- S3: Prüfen Querdynamikkriterium
- S4: Kommunizieren Bremsbefehl

## Patentansprüche

1. Verfahren zum Betreiben eines selbstfahrenden Fahrzeugs (100), mit den Schritten: Festlegen (S1) einer Querdynamikanforderung zum Steuern der Querdynamik des selbstfahrenden Fahrzeugs (100) entlang einer vorbestimmten Fahrtroute (2), und Kommunizieren (S2) der festgelegten Querdynamikanforderung an eine Lenkungssteuereinrichtung (20) zum Steuern einer Lenkkinematik (30) des selbstfahrenden Fahrzeugs (100) basierend auf der festgelegten Querdynamikanforderung, **gekennzeichnet durch** die Schritte: Prüfen (S3), ob die kommunizierte Querdynamikanforderung ein Querdynamikkriterium für den Betrieb des selbstfahrenden Fahrzeugs (100) erfüllt, und Kommunizieren (S4) eines Bremsbefehls zum Stillsetzen des selbstfahrenden Fahrzeugs (100) in Abhängigkeit eines aus dem Schritt des Prüfens (S3) resultierenden Prüfergebnisses (P).

2. Verfahren nach Anspruch 1, wobei die festgelegte Querdynamikanforderung eine Lenkwinkelvorgabe zum Steuern der Lenkkinematik (30) aufweist.

3. Verfahren nach Anspruch 1 oder 2, wobei die Schritte des Festlegens (S1) der Querdynamikanforderung und des Kommunizierens (S2) der festgelegten Querdynamikanforderung von einer auf dem selbstfahrenden Fahrzeug (100) angeordneten Navigationseinrichtung (10) durchgeführt werden.

4. Verfahren nach einem der vorhergehenden Ansprüche, wobei im Schritt des Prüfens (S3) geprüft wird, ob mit der kommunizierten Querdynamikanforderung ein Grenzwert für einen Querdynamikzustand des selbstfahrenden Fahrzeugs (100) überschritten wird, und im Schritt des Kommunizierens (S4) der Bremsbefehl kommuniziert wird, wenn ein Überschreiten des Grenzwerts vorliegt.

5. Verfahren nach Anspruch 4, wobei der Grenzwert für den Querdynamikzustand mindestens eines von einem maximalen Lenkwinkel, einem maximalen Lenkwinkelgradienten und einem maximalen Lenkwinkelruck aufweist.

6. Verfahren nach einem der vorhergehenden Ansprüche, mit dem weiteren Schritt eines Bestimmens des Querdynamikkriteriums in Abhängigkeit von einem Längsdynamikzustand des selbstfahrenden Fahrzeugs (100).

7. Verfahren nach einem der vorhergehenden Ansprüche, mit dem weiteren Schritt eines Bestimmens des Querdynamikkriteriums in Abhängigkeit von einem Aufenthaltsort des selbstfahrenden Fahrzeugs (100) in Bezug auf die vorbestimmte Fahrtroute (2).

8. Verfahren nach einem der vorhergehenden Ansprüche, wobei im Schritt des Prüfens (S3) geprüft wird, ob die kommunizierte Querdynamikanforderung das vorbestimmte Querdynamikkriterium für eine vorbestimmte Zeitdauer erfüllt.

9. Verfahren nach einem der vorhergehenden Ansprüche, wobei die Schritte des Prüfens (S3) der Querdynamikanforderung und des Kommunizierens (S4) des Bremsbefehls von der Lenkungssteuereinrichtung (20) durchgeführt werden.

10. Steuersystem (200) zum Betreiben eines selbstfahrenden Fahrzeugs (100), mit einer Navigationseinrichtung (10), welche eingerichtet ist, eine Querdynamikanforderung zum Steuern der Querdynamik des selbstfahrenden Fahrzeugs (100) entlang einer vorbestimmten Fahrtroute (2) festzulegen und die festgelegte Querdynamikanforderung an eine Lenkungssteuereinrichtung (20) zum Steuern einer Lenkkinematik (30) des selbstfahrenden Fahrzeugs (100) zu kommunizieren, und einer Prüfeinrichtung (22), welche eingerichtet ist, zu prüfen, ob die kommunizierte Querdynamikanforderung ein Querdynamikkriterium für den Betrieb des selbstfahrenden Fahrzeugs (100) erfüllt, und einen Bremsbefehl zum Stillsetzen des selbstfahrenden Fahrzeugs (100) auszugeben, wenn die kommunizierte Querdynamikanforderung das Querdynamikkriterium für den Betrieb des selbstfahrenden Fahrzeugs (100) erfüllt.

11. Selbstfahrendes Fahrzeug (100), welches ein Steuersystem (200) nach Anspruch 10 zum automatisierten Betreiben des selbstfahrenden Fahrzeugs (100) aufweist.
